# EUROPÄISCHE PATENTSCHRIFT

(11) **EP 0 844 353 B1**
(45) Veröffentlichungstag und Bekanntmachung des Hinweises auf die Patenterteilung: **29.08.2001**
(21) Anmeldenummer: 97120235.3
(22) Anmeldetag: 19.11.1997
(51) Int. Cl.: E05D 15/06, A47K 3/34

(54) **Führrungsschiene zum Führen und/oder Tragen eines relativ zu der Führungsschiene bewegbaren Gegenstandes sowie Raumtrennvorrichtung**
Guide rail for guiding and/or supporting an movable object relatively to the guide rail and space divider system
Rail de guidage pour guider et/ou supporter un objet déplaçable par rapport au rail de guidage et dispositif de cloison

(30) Priorität: 22.11.1996 DE 29620328 U
(43) Veröffentlichungstag der Anmeldung: 27.05.1998
(73) Patentinhaber: Hüppe GmbH & Co., D-26158 Bad Zwischenahn (DE)
(72) Erfinder: Bremm, Klaus, 26209 Sandkrug (DE); Behrens, Volker, 26121 Oldenburg (DE)
(74) Vertreter: Eisenführ, Speiser & Partner

(56) Entgegenhaltungen:
- DE-A- 3 613 313
- DE-U- 8 902 207
- DE-U- 29 516 569
- GB-A- 2 163 801
- US-A- 4 868 935

## Beschreibung

Die vorliegende Erfindung betrifft in einem ersten Aspekt eine Führungsschiene zum Führen und/oder Tragen eines mittels Laufrollen relativ zu der Führungsschiene bewegbaren Gegenstandes, insbesondere einer verfahrbaren Schiebetür, mit einem unteren Tragabschnitt auf dem eine Laufrolle abrollen kann, einem mit dem Tragabschnitt verbundenen oberen Führungsabschnitt und mit einem sich entlang der Führungsschiene erstreckenden Kontaktabschnitt, der mit einer Laufrolle in Berührung ist und an dessen Oberfläche es während einer Bewegung des Gegenstandes zu Roll- oder Gleitreibung kommt.

Die Erfindung betrifft in einem zweiten Aspekt eine Raumtrenn-Vorrichtung, insbesondere Duschabtrennung, mit mindestens einer ortsfesten Trennwand sowie mindestens einer von einer an der ortsfesten Trennwand befestigten Führungsschiene getragenen Schiebetür die mittels entlang der Führungsschiene auf einem unteren Tragabschnitt der Führungsschiene abrollbarer Laufrollen an der Führungschiene verschiebbar gelagert ist, wobei die Führungsschiene einen mit dem Tragabschnitt verbundenen, oberen Führungsabschnitt und mindestens einen Kontaktabschnitt aufweist, der mit mindestens einer Laufrolle in Berührung ist und an dessen Oberfläche es während des Abrollens einer Laufrolle zu Roll- oder Gleitreibung kommt.

Eine derartige Führungsschiene ist bekannt und kommt an einer ebenfalls bekannten als Duschabtrennung ausgebildeten Raumtrenn-Vorrichtung der eingangs genannten Art zum Einsatz. Bei dieser Duschabtrennung sind zwei Schiebetüren entlang einer im oberen Bereich der Duschabtrennung an ortsfesten Trennwänden befestigten Führungsschiene der eingangs genannten Art mittels Laufrollen verfahrbar und hängend gelagert. An jeder Schiebetür sind im oberen Bereich an einem horizontalen Rahmenelement zwei Laufrollen angeordnet, die auf einem unteren Tragabschnitt der Führungsschiene abrollen können, so daß die Schiebetür mit relativ geringen Kräften verschiebbar ist.

Die bei dieser Duschabtrennung verwendeten Laufrollen sind als sphärisch gelagerte Laufrollen ausgebildet. Die Laufrollen sind mittels eines Kugel-Pfannen-Gelenks gelagert, indem eine an einem Tragarm befestigte Kugel innerhalb einer Kugelpfanne drehbar angeordnet ist, die mittig innerhalb der Laufrolle angeordnet ist. Der Tragarm ist mit einem oberen Rahmenelement der Schiebetür verbunden. Die sphärische Lagerung ermöglicht ein Abschwenken der gesamten Schiebetür heraus aus einer im wesentlichen vertikalen Anordnung, was beispielsweise den Vorteil bringt, daß die Schiebetür im abgeschwenkten Zustand leichter gereinigt werden kann.

Die sphärisch gelagerte Laufrolle liegt einerseits auf dem unteren Tragabschnitt der Führungsschiene auf und ist andererseits mit einem ihrem oberen Abschnitt mit einem (oberen) Kontaktabschnitt der Führungsschiene in Berührung. An dem Kontaktabschnitt wird eine Abstütz-Kraft von der Laufrolle auf die Führungsschiene übertragen, um die Laufrolle abzustützen, im Ausführungsbeispiel in einer im wesentlichen vertikalen Anordnung zu halten. Die (obere) Abstützung der Laufrolle ist erforderlich, um ein Drehmoment aufzunehmen, das dadurch entsteht, daß die Schiebetür in einem seitlichen Abstand zu der Führungsschiene und somit zu einer Laufrolle angeordnet ist.

Während des Verschiebens der Schiebetür und während des damit einhergehenden Abrollens der Laufrollen entlang der Führungsschiene kommt es an dem unteren Tragabschnitt zu einer Abrollbewegung der Laufrolle auf der Führungsschiene, während es im oberen Bereich der Führungsschiene an dem Kontaktabschnitt zu Gleitreibung zwischen der Laufrolle und der Führungsschiene kommt. Ein jeweils oberer Abschnitt der Laufrolle gleitet mit einer verhältnismäßig hohen Relativ-Geschwindigkeit auf dem Kontaktabschnitt.

Eine ähnliche Gleitbewegung kann aber nicht nur bei der zuvor beschriebenen Anwendung einer Führungsschiene, sondern generell an Führungsschienen auftreten, an der ein bewegbarer Gegenstand entlang der Schiene abrollt oder gleitet, was Roll- oder Gleitreibung zur Folge hat. Derartige Reibung verursachende Bewegung bringt mehrere Nachteile mit sich:

Einerseits kommt es durch die Gleitbewegung, aber auch beim Auftreten von sog. Rollreibung, zu einer starken Geräuschbildung während des Verschiebens einer Schiebetür, denn die Laufrollen "schleifen" an dem Kontaktabschnitt, wodurch die Laufrollen und die Führungsschiene in Schwingungen versetzt werden und Geräusche entstehen, die als störend empfunden werden.

Ferner entstehen durch die Gleitbewegung an dem Kontaktabschnitt verhältnismäßig große Reibungskräfte, die einer Verschiebung entgegenwirken, so daß eine Verschiebung einer Schiebetür erschwert wird.

Weiterhin kommt es an dem Kontaktabschnitt aufgrund der Gleitreibung zu einem verhältnismäßig großen Abrieb und somit Verschleiß sowohl an der Führungsschiene als auch an der Laufrolle. Dies hat zur Folge, daß nach einer längeren Betriebszeit die Laufrolle und die Führungsschiene beschädigt werden und gegebenenfalls ausgewechselt werden müssen.

Aus dem deutschen Gebrauchsmuster G 89 02 207.6 ist eine Duschkabinen-Schiebetür mit mehreren längs einer oberen Führungsschiene verschiebbaren Schiebetürflügeln bekannt. Die Schiebetürflügel können unabhängig voneinander aus ihrer vertikalen Stellung heraus in eine Schräglage verschwenkt werden. Dies wird durch eine Führungsschiene mit kreisförmigem Querschnitt ermöglicht. Eine mit einem Schiebetürflügel verbundene Laufrolle ist an der Führungsschiene pendelnd gelagert. Bei dieser Schiebetür kommt es zu den oben beschriebenen Nachteilen einer Geräuschbildung, hoher Reibung und Verschleiss aufgrund der Reibungskräfte zwischen den Laufrollen und dem oberen Bereich der Führungsschiene.

Der vorliegenden Erfindung liegt die Aufgabe zugrunde, eine Führungsschiene und eine Raumtrenn-Vorrichtung der eingangs genannten Art anzugeben, die unter Vermeidung der Nachteile des Standes der Technik günstige Betriebseigenschaften und eine lange Standzeit aufweisen.

Die Aufgabe wird gemäß des ersten Aspekts der Erfindung gelöst mit einer Führungsschiene mit den Merkmalen des Anspruchs 1.

Die Aufgabe wird gemäß des zweiten Aspekts der Erfindung gelöst durch eine Raumtrenn-Vorrichtung mit den Merkmalen des Anspruchs 9.

Durch die Erfindung werden eine Reihe von vorteilhaften Wirkungen erzielt:

Durch die Befestigung des erfindungsgemäßen Gleitelements, das zweckmäßigerweise aus einem reibungs-, abrieb- und somit verschleißarmen Material besteht, werden die während einer Bewegung des Gegenstandes auftretenden Reibungskräfte zwischen dem sich bewegenden Gegenstand, beispielsweise einer Laufrolle, und der Führungsschiene verringert.

Die erfindungsgemäße Führungsschiene ist versehen mit einem unterem Tragabschnitt, auf dem eine - vorzugsweise sphärisch gelagerte - Laufrolle abrollen kann, sowie mit einem mit dem Tragabschnitt verbundenen, oberen Führungsabschnitt, an dem die Laufrolle anliegt und während des Abrollens gleitet. Die Führungsschiene ist angepasst an eine Schiebetür, die mittels der Laufrolle entlang der Führungsschiene abrollt und während des Abrollens in ihrem oberen Bereich mit dem Gleitelement in Berührung steht und während einer Verschiebung der Tür gleitet. Hierbei kann es sich um eine sphärisch oder anderweitig gelagerte Laufrolle handeln. Verschleiß, Geräuschentwicklung und erforderliche Verschiebekräfte können auf diese Weise gleichzeitig minimiert werden.

Dementsprechend kann an einer erfindungsgemäßen Raumtrenn-Vorrichtung der Benutzungskomfort deutlich erhöht werden, denn eine Schiebetür kann mit relativ geringen Kräften verschoben werden.

Das Gleitelement kann aus einem anderen Material als die Führungsschiene gefertigt sein, und die Materialeigenschaften können dem jeweiligen Anwendungszweck und den jeweiligen Anwendungsbedingungen angepaßt werden. Beispielsweise kann das Material der Führungsschiene zur Gewichtsersparnis besonders leicht sein, während das Gleitelement eine besonders hohe Festigkeit oder Oberflächenhärte aufweist. Das Material des Gleitelements kann ferner dem Material des bewegbaren Gegenstandes angepaßt werden, um einen möglichst geringen Reibungskoeffizienten zu erzielen.

Die Geräuschentwicklung während einer Relativ-Bewegung des Gegenstandes, im Falle einer erfindungsgemäßen Raumtrenn-Vorrichtung während des Abrollens der Laufrollen entlang der Führungsschiene, kann durch die Verwendung des erfindungsgemäßen Gleitelements stark verringert werden.

Ferner kann das Gleitelement, das nur einem geringen Verschleiß durch Abrieb unterliegt, nach einer langen Betriebszeit der Führungsschiene bei Bedarf abmontiert und durch ein neues Gleitelement ersetzt werden, welches als Ersatzteil an der Führungsschiene befestigt wird.

Eine Weiterbildung der Erfindung zeichnet sich dadurch aus, daß das Gleitelement aus Kunststoff besteht, der zweckmäßigerweise eine große Härte, eine geringe Oberflächenrauhigkeit und gute Dämpfungseigenschaften aufweist, um eine möglichst reibungsarme Relativbewegung zwischen dem Gleitelement und einem sich bewegenden Gegenstand verwirklichen zu können und um die Geräuschentwicklung zu minimieren. Kunststoffe mit unterschiedlichen Eigenschaften sind relativ kostengünstig erhältlich und können in einer der jeweiligen Anwendung individuell angepaßten Form hergestellt werden.

Eine weitere bevorzugte Ausführungsform der erfindungsgemäßen Führungsschiene zeichnet sich dadurch aus, daß das Gleitelement mittels einer formschlüssigen Verbindung an der Führungsschiene befestigt ist. Das Gleitelement kann dabei so ausgestaltet sein, daß es sich auf einfache Weise an der Führungsschiene montieren läßt, beispielsweise durch ein Anklemmen oder Anklippen. Zu diesem Zweck kann - gemäß einer Weiterbildung dieser Ausführungsform - an der Führungsschiene mindestens ein Ansatz mit einem im Querschnitt erweitertem Halte-Kopf ausgebildet sein, und das Gleitelement hintergreift den Halt-Kopf teilweise. Der derartig gestaltete Führungsschiene kann auf einfache Weise an den Ansatz angeklemmt werden. Ferner ergibt sich der Vorteil, daß das Gleitelement auf ebenso einfache Weise demontiert werden kann, um es beispielsweise durch ein neues Gleitelement zu ersetzen. Besonders günstig ist eine Ausführungsform, bei der das Gleitelement als extrudiertes Kunststoff-Profil mit einem etwa C-förmigen Querschnitt ausgebildet ist.

Gemäß einer Weiterbildung der zuvor beschriebenen Ausführungsform sind das Gleitelement und der Tragabschnitt im montierten Zustand in einer im wesentlichen vertikal angeordneten Ebene und teilweise in einer in einer Laufrolle ausgebildeten umlaufenden Nut angeordnet. Diese Art der Anordnung des Gleitelements sowie des Tragabschnitts gewährleisten eine sichere Führung der Laufrolle.

Ist die erfindungsgemäße Raumtrenn-Vorrichtung mit einer Führungsschiene gemäß den zuvor beschriebenen Ausführungsbeispielen versehen, so geben sich im wesentlichen die gleichen Vorteile, die zuvor beschrieben worden sind. Hervorzuheben ist, daß mit Hilfe des erfindungsgemäßen Gleitelements die Geräuschentwicklung an einer Duschabtrennung aufgrund der oben beschriebenen Effekte erheblich reduziert werden kann gegenüber den bekannten Duschabtrennungen. Diese unterliegen generell einer großen Geräuschentwicklung, da die Trennwände und Schiebetüren sowie die eingesetzten Kunststoffkomponenten leicht in Schwingungen versetzt werden. Ferner kann mit Hilfe eines erfindungsgemäßen Gleitelements verhindert werden, daß eine häufig an Führungsschienen von Duschabtrennungen angebrachte Beschichtung, beispielsweise in Form eines Farbanstrichs oder einer Eloxierung, durch die Befestigung eines erfindungsgemäßen Gleitelements geschützt wird und nicht - wie im Stand der Technik - durch Gleitreibung zwischen einer Laufrolle und der Führungsschiene beschädigt wird.

Die Erfindung wird nachfolgend anhand von Ausführungsbeispielen einer erfindungsgemäßen Führungsschiene sowie einer erfindungsgemäßen Raumtrenn-Vorrichtung in Form einer Duschabtrennung unter Bezugnahme auf die beiliegenden Zeichnungen beschrieben. Es zeigen:
- Fig.1: eine erfindungsgemäße Raumtrenn-Vorrichtung in Form einer Duschabtrennung, die mit einer erfindungsgemäßen Führungsschiene zum Tragen und Führen einer Schiebetür versehen ist, in einer perspektivischen Gesamtansicht;
- Fig. 2: eine erfindungsgemäße Führungsschiene mit Gleitelement zur Führung einer Laufrolle einer Schiebetür einer Duschabtrennung in einer Schnittdarstellung;
- Fig. 3: eine vergrößerte Darstellung eines Ausschnitts der in Fig. 2 dargestellten Führungsschiene;

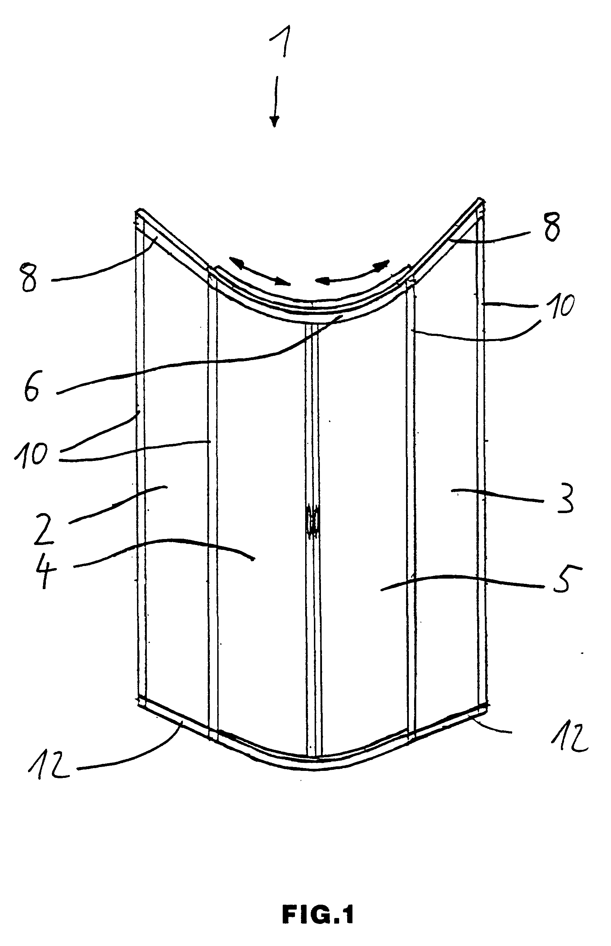

Die in Fig. 1 dargestellte erfindungsgemäße Raumtrenn-Vorrichtung ist als Duschabtrennung 1 ausgebildet und weist zwei ortsfeste Trennwände 2, 3 und zwei beweglich angeordnete Schiebetüren 4, 5 auf. Sie ist im oberen Bereich mit einer erfindungsgemäßen Führungsschiene 6 versehen, die von den ortsfesten Trennwänden 2, 3 getragen und an oberen Rahmenelementen 8 der Trennwände 2, 3 befestigt ist. Die Trennwände 2, 3 weisen weitere, seitliche Rahmenelemente 10 und untere Rahmenelemente 12 auf. Die Schiebetüren 4, 5 sind hängend und in vertikaler Anordnung beweglich mittels Laufrollen an der Führungsschiene 6 gelagert.

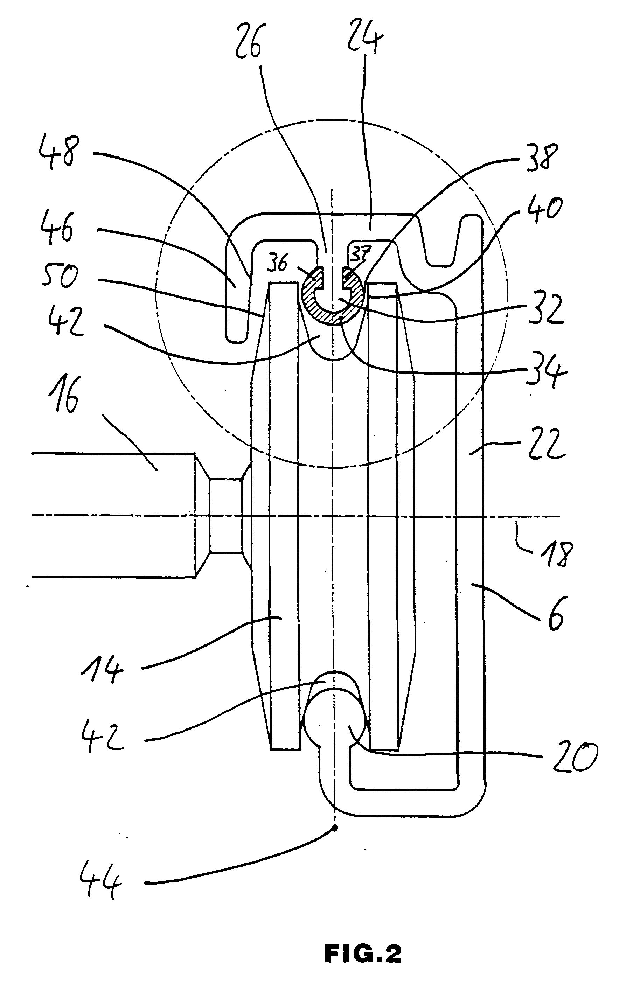

Fig. 2 zeigt die erfindungsgemäße, obere Führungsschiene 6 in vergrößerter Schnitt-Darstellung mit einer Laufrolle 14, von denen mindestens zwei im oberen Bereich einer Schiebetür 4, 5 beabstandet zueinander angeordnet und befestigt sind. Die Laufrolle 14 ist in nicht dargestellter Weise sphärisch an einem Tragelement 16 gelagert, das seinerseits - in nicht dargestellter Weise - mit der Schiebetür 4 oder 5 verbunden ist und diese hängend trägt.

Zur sphärischen Lagerung dient ein an einem Ende des Tragelements 16 angeordnetes Kugel-Pfannen-Gelenk, das eine an dem Tragelement 16 angebrachte Kugel sowie eine die Kugel weitgehend umschließende, an der Laufrolle 14 ausgebildete Kugelpfanne aufweist. Mit Hilfe des Kugel-Pfannen-Gelenks ist die Laufrolle 16 einerseits um eine Drehachse 18 drehbar und um den Mittelpunkt des Kugelgelenks verschwenkbar gelagert. Durch diese Lagerung ist die Schiebetür 4, 5 abschwenkbar angeordnet, so daß die Schiebetür aus ihrer vertikalen Ausrichtung verschwenkt werden kann, um sie beispielsweise bequem reinigen zu können.

Aus Figur 2 ist ersichtlich, daß das Gleitelement 34 und der Tragabschnitt 20 in montiertem Zustand in einer vertikal angeordneten Ebene angeordnet sind, die parallel zu dem Verbindungsabschnitt 22 der Führungsschiene 6 verläuft. Gleitelement 34 und Tragabschnitt 20 liegen teilweise in einer in der Laufrolle 14 ausgebildeten umlaufenden Nut 42.

Wie am Besten in Fig. 2 dargestellt ist, weist die Führungsschiene 6 einen unteren Tragabschnitt 20 sowie einen mittels eines im wesentlichen plattenförmigen Verbindungsabschnitt 22 mit dem Tragabschnitt 20 verbundenen, oberen Führungsabschnitt 24 auf. Während der Verschiebung einer Schiebetür 4, 5 rollt die Laufrolle 14 auf dem schienenartig ausgebildeten unteren Tragabschnitt 20 ab, während die Laufrolle 14 von dem oberen Führungsabschnitt 24 gleitend geführt wird.

Der obere Führungsabschnitt 24 weist einen sich in Längsrichtung der Führungsschiene 6 und im wesentlichen vertikal erstreckenden Ansatz 26 auf. Der Ansatz 26 ist mit zwei parallel und gegenüberliegend angeordneten Nuten 28, 29 sowie einem sich im Querschnitt gegenüber dem zwischen den Nuten 28 und 29 angeordneten Abschnitt 30 erweiterten Halte-Kopf 32 versehen.

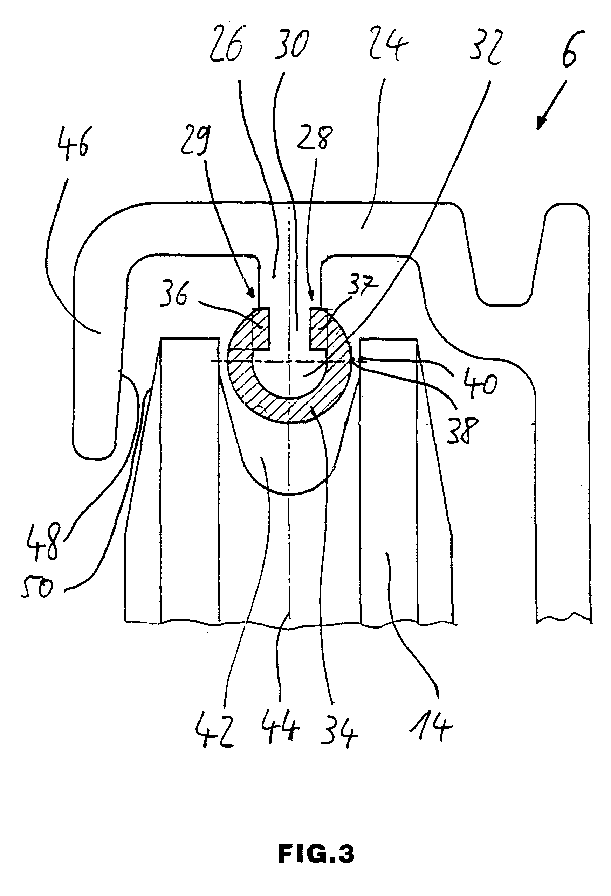

Ein Gleitelement 34 mit - wie aus den Figuren 2 und 3 ersichtlich ist - etwa C-förmigem Querschnitt ist mittels einer formschlüssigen Verbindung lösbar an dem Ansatz 26 der Führungsschiene 6 befestigt. Zwei leistenförmige Endabschnitte 36 des Gleitelements 34 hintergreifen den Halte-Kopf 32 des Ansatzes 26 und liegen im wesentlichen innerhalb der Nuten 28, so daß die formschlüssige Verbindung zwischen dem Gleitelement 34 und dem Ansatz 26 der Führungsschiene 6 hergestellt ist.

Das Gleitelement 34 weist einen Kontaktabschnitt 38 an der äußeren Oberfläche auf, der - in nicht dargestellter Weise - mit einem dem Kontaktabschnitt 38 gegenüberliegenden Kontaktbereich 40 der Laufrolle 14 in Berührung ist. Kontaktabschnitt 38 und Kontaktbereich 40 stehen während des Betriebs der Führungsschiene 6 und der Duschabtrennung in Berührung zueinander. Während des Verschiebens der Schiebetür 4, 5 kommt es zwischen Kontaktabschnitt 38 und Kontaktbereich 40 zu Gleitreibung. Die sphärisch gelagerte Laufrolle 14 wird an dem Kontaktabschnitt 38 des Gleitelements 34 abgestützt.

Das Gleitelement 34 ist aus einem Kunststoff extrudiert, der eine relativ große Härte aufweist, verschleiß- und reibungsarm ist und eine geringe Oberflächenrauhigkeit aufweist. Bei dem Kunststoff kann es sich um Polyäthylen (PE), Polypropylen (PP) oder Polyamid (PA) handeln. Die Zusammensetzung des Kunststoffs und dessen Material- und Oberflächeneigenschaften können variiert und den Eigenschaften des Materials der Laufrolle 14 angepaßt werden, um einen geringen Reibungskoeffizient zwischen Gleitelement 34 und Laufrolle 14, eine geringe Geräuschentwicklung während einer Relativ-Bewegung sowie einen geringen Abrieb des Gleitelements 34 und der Laufrolle 14 zu erzielen. Ferner kann das Material des Gleitelements 34 schalldämpfend wirken.

Gemäß eines alternativen, nicht dargestellten Ausführungsbeispiels der erfindungsgemäßen Führungsschiene bzw. der erfindungsgemäßen Raumtrenn-Vorrichtung ist das Gleitelement 34 nicht teilweise innerhalb der Nut 42 der Laufrolle angeordnet, sondern seitlich beabstandet von einer Mittelebene 44 der Laufrolle 34. Beispielsweise kann das Gleitelement 34 an einem seitlich von der Laufrolle 14 angeordneten Ansatz 46 der Führungsschiene, vgl. Fig. 3, an dessen der Laufrolle 14 zugewandter Innenfläche 48 befestigt sein, so daß der Kontaktabschnitt des Gleitelements mit einer seitlichen Flanke 50 der Laufrolle 14 in Berührung steht. Das Gleitelement kann zur Befestigung beispielsweise in eine ebenfalls nicht dargestellte Nut im Bereich der Innenfläche 48 des Ansatzes 46 eingepreßt, eingeklebt oder eingeschraubt sein. Die äußere Form des Gleitelements kann der Form der Flanke 50 angepaßt sein.

Auch kann zusätzlich zu dem in Figur 3 dargestellten Gleitelement an dem Ansatz 46 ein weiteres Gleitelement im Bereich der Innenfläche 48 befestigt sein, so daß die Laufrolle 14 zwei Kontaktabschnitte 38 aufweist, an denen die Laufrolle 14 mit der Führungsschiene 6 in - während des Verschiebens in gleitender - Berührung ist.

Im Ausführungsbeispiel ist die Führungsschiene 6 an einer Duschabtrennung installiert, jedoch kann sie auch an anderen Gegenständen eingesetzt werden, an denen es zu erhöhter Reibung zwischen sich relativ zueinander bewegenden Oberflächen kommt.

## Patentansprüche

1. Führungsschiene zum Führen und/oder Tragen eines mittels Laufrollen (14) relativ zu der Führungsschiene (6) bewegbaren Gegenstandes, insbesondere einer verfahrbaren Schiebetür (4, 5),
mit einem unteren Tragabschnitt (20) auf dem eine Laufrolle (14) abrollen kann, einem mit dem Tragabschnitt (20) verbundenen oberen Führungsabschnitt (24) und
mit einem sich entlang der Führungsschiene (6) erstreckenden Kontaktabschnitt (38), der mit einer Laufrolle(14) in Berührung ist und an dessen Oberfläche es während einer Bewegung des Gegenstandes zu Roll- oder Gleitreibung kommt,
gekennzeichnet durch ein an dem oberen Führungsabschnitt (24) befestigtes Gleitelement (34), das den Kontaktabschnitt (38) aufweist.

2. Führungsschiene nach Anspruch 1 oder 2,
**dadurch gekennzeichnet**, daß das Gleitelement(34) aus Kunststoff besteht.

3. Führungsschiene nach Anspruch 3,
**dadurch gekennzeichnet**, daß der Kunststoff eine große Härte, eine geringe Oberflächenrauhigkeit und/oder gute Dämpfungseigenschaften aufweist.

4. Führungsschiene nach einem der vorstehenden Ansprüche,
**dadurch gekennzeichnet**, daß das Gleitelement (34) mittels einer formschlüssigen Verbindung am oberen Führungsabschnitt (24) befestigt ist.

5. Führungsschiene nach Anspruch 5,
**dadurch gekennzeichnet**, daß am oberen Führungsabschnitt (24) mindestens ein Ansatz (26) mit einem im Querschnitt erweiterten Halte-Kopf (32) ausgebildet ist und das Gleitelement (34) den Halte-Kopf (32) teilweise hintergreift.

6. Führungsschiene nach Anspruch 6,
**dadurch gekennzeichnet**, daß das Gleitelement (34) als extrudiertes Profil mit einem etwa C-förmigen Querschnitt ausgebildet ist.

7. Führungsschiene nach einem der vorstehenden Ansprüche,
**dadurch gekennzeichnet**, daß das Gleitelement (34) und der Tragabschnitt (20) im montierten Zustand in einer im wesentlichen vertikal angeordneten Ebene und teilweise in einer Laufrolle ausgebildeten umlaufenden Nut (42) angeordnet sind.

8. Raumtrenn-Vorrichtung, insbesondere Duschabtrennung, mit mindestens einer ortsfesten Trennwand (2, 3) sowie mindestens einer von einer an der ortsfesten Trennwand (2, 3) befestigten Führungsschiene (6) getragenen Schiebetür (4, 5), die mittels entlang der Führungsschiene (6) auf einem unteren Tragabschnitt (20) der Führungsschiene (6) abrollbarer Laufrollen an der Führungschiene (6) verschiebbar gelagert ist, wobei die Führungsschiene (6) einen mit dem Tragabschnitt (20) verbundenen oberen Führungsabschnitt (24) und mit mindestens einem sich entlang der Führungsschiene (6) erstreckenden Kontaktabschnitt (38) der mit mindestens einer Laufrolle (14) in Berührung ist und an dessen Oberfläche es während des Abrollens einer Laufrolle (14) zu Roll- oder Gleitreibung kommt,
gekennzeichnet durch ein am oberen Führungsabschnitt (24) befestigtes Gleitelement (34), das den Kontaktabschnitt (38) aufweist.

9. Raumtrenn-Vorrichtung nach Anspruch 9,
gekennzeichnet durch eine Führungsschiene (6) nach mindestens einem der Ansprüche 2 bis 8.

10. Führungsschiene nach Anspruch 8 oder 9,
**dadurch gekennzeichnet**, daß die Laufrolle (14) sphärisch gelagert ist.

## Claims

1. A guide rail for guiding and/or supporting an object which is movable relative to the guide rail (6) by means of rollers (14), in particular a displaceable sliding door (4, 5), having a lower supporting portion (20) on which a roller (14) can run, an upper guide portion (24) which is connected to the supporting portion (20), and a contact portion (38) which extends along the guide rail (6) and is in contact with a roller (14) and on the surface whereof there is a rolling or sliding friction during movement of the object, characterised by a sliding element (34) which is secured to the upper guide portion (24) and has the contact portion (38).

2. A guide rail according to Claim 1, **characterised in that** the sliding element (34) is made from synthetic material.

3. A guide rail according to Claim 2, **characterised in that** the synthetic material has a high hardness value, a low surface roughness and/or good damping properties.

4. A guide rail according to one of the preceding claims, **characterised in that** the sliding element (34) is secured to the upper guide portion (24) by means of a form-fitting connection.

5. A guide rail according to Claim 4, **characterised in that** constructed on the upper guide portion (24) is at least one projecting piece (26) having a retaining head (32) which is widened in cross-section, and the sliding element (34) reaches partly behind the retaining head (32).

6. A guide rail according to Claim 5, **characterised in that** the sliding element (34) is constructed as an extruded profile having an approximately C-shaped cross-section.

7. A guide rail according to one of the preceding claims, **characterised in that**, in the mounted condition, the sliding element (34) and the supporting portion (20) are arranged in a substantially vertical plane and partly in a peripheral groove (42) formed in a roller.

8. A room-dividing device, in particular a shower partition, having at least one fixed partition wall (2, 3) and at least one sliding door (4, 5) which is borne by a guide rail (6) secured to the fixed partition wall (2, 3) and is displaceably mounted on the guide rail (6) by means of rollers which can run along the guide rail (6) on a lower supporting portion (20) of the guide rail (6), the guide rail (6) comprising an upper guide portion (24) which is connected to the supporting portion (20), and with at least one contact portion (38) which extends along the guide rail (6) and is in contact with at least one roller (14) and on the surface whereof, during running of a roller (14), there is a rolling or sliding friction, characterised by a sliding element (34) which is secured to the upper guide portion (24) and has the contact portion (38).

9. A room-dividing device according to Claim 8, characterised by a guide rail (6) according to at least one of Claims 2 to 8.

10. A guide rail according to Claim 8 or 9, **characterised in that** the roller (14) is mounted spherically.

## Revendications

1. Rail de guidage pour le guidage et / ou le support d'un objet mobile au moyen de galets de roulement (14) par rapport au rail de guidage (6), en particulier une porte coulissante (4, 5) déplaçable,
avec une partie de support (20) inférieure sur laquelle un galet de roulement (14) peut rouler, une partie de guidage (24) supérieure reliée à la partie de support (20) et avec une partie de contact (38) s'étendant le long du rail de guidage (6), qui est en contact avec un galet de roulement (14) et à la surface de laquelle il vient en frottement par roulement ou glissement pendant un déplacement de l'objet, caractérisé par un élément de glissement (34) fixé à la partie de guidage (24) supérieure, qui présente la partie de contact (38).

2. Rail de guidage selon la revendication 1, **caractérisé en ce que** l'élément de glissement (34) est en plastique.

3. Rail de guidage selon la revendication 2, **caractérisé en ce que** le plastique présente une grande dureté, une faible rigidité de surface et/ou de bonnes propriétés d'amortissement.

4. Rail de guidage selon l'une quelconque des revendications précédentes, **caractérisé en ce que** l'élément de glissement (34) est fixé sur la partie de guidage (24) supérieure au moyen d'une liaison mécanique.

5. Rail de guidage selon la revendication 4, **caractérisé en ce qu**'au moins une saillie (26) avec une tête de retenue (32) élargie en section est formée sur la partie de guidage (24) supérieure et l'élément de glissement (34) saisit en partie par l'arrière la tête de retenue (32).

6. Rail de guidage selon la revendication 5, **caractérisé en ce que** l'élément de glissement (34) est conçu comme profilé extrudé avec une section approximativement en forme de C.

7. Rail de guidage selon l'une quelconque des revendications précédentes, **caractérisé en ce que** l'élément de glissement (34) et la partie de support (20) est disposé dans un plan disposé sensiblement verticalement et dans une rainure (42) périphérique conçue en partie dans un galet de roulement.

8. Dispositif de séparation d'espace, en particulier séparation de douche, avec au moins une paroi de séparation (2, 3) fixe et au moins une porte coulissante (4, 5) portée par un rail de guidage (6) fixé sur la cloison de séparation (2, 3) fixe, laquelle porte est logée de façon coulissante sur le rail de guidage (6) au moyen de galets de roulement roulant le long du rail de guidage (6) sur une partie de support (20) inférieure du rail de guidage (6), le rail de guidage (6) présentant une partie de guidage (24) supérieure et reliée à la partie de support (20) et avec au moins une partie de contact (38) s'étendant le long du rail de guidage (6), laquelle est en contact avec au moins un galet de roulement (14) et à la surface de laquelle on a un frottement par roulement au glissement pendant le roulement d'un galet (14),
caractérisé par un élément de glissement (34) qui est fixé sur la partie de guidage (24) supérieure et présente la partie de contact (38).

9. Dispositif de séparation d'espace selon la revendication 8, caractérisé par un rail de guidage (6) selon au moins l'une quelconque des revendications 2 à 8.

10. Rail de guidage selon la revendication 8 ou 9, **caractérisé en ce que** le galet de roulement (14) est logé de façon sphérique.
